# EUROPÄISCHE PATENTSCHRIFT

(11) **EP 1 114 258 B1**
(45) Veröffentlichungstag und Bekanntmachung des Hinweises auf die Patenterteilung: **02.04.2003**
(21) Anmeldenummer: 99969477.1
(22) Anmeldetag: 11.09.1999
(51) Int. Cl.: F16F 9/348, F16F 9/44, F16L 55/04

(54) **DÄMPFUNGSVENTIL**
DAMPING VALVE
SOUPAPE D'AMORTISSEMENT

(30) Priorität: 18.09.1998 DE 19842840
(43) Veröffentlichungstag der Anmeldung: 11.07.2001
(73) Patentinhaber: ZF Lenksysteme GmbH, 73522 Schwäbisch Gmünd (DE)
(72) Erfinder: ERTLE, Peter, D-73568 Durlangen (DE)
(86) Internationale Anmeldenummer: EP9906745
(87) Internationale Veröffentlichungsnummer: WO00017539

(56) Entgegenhaltungen:
- CH-A- 393 108
- DE-A- 19 603 183
- DE-A- 19 620 975
- DE-U- 1 961 350
- FR-A- 1 535 025
- FR-A- 2 327 465
- FR-E- 86 286
- GB-A- 1 351 916

## Beschreibung

Die Erfindung betrifft ein Dämpfungsventil für druckmittelbetätigte Arbeitskreisläufe und die Verwendung eines solchen Dämpfungsventils in einer Hilfkraftlenkung für Kraftfahrzeuge. In dem Dämpfungsventil wird ein Durchflußquerschnitt durch das Zusammenwirken von Gehäuse, Federelement, Deckel und Gegenkontur eingestellt.

In hydraulisch oder pneumatisch betätigten Arbeitskreisläufen können Schwingungen auftreten, die beispielsweise in der Servopumpe oder durch Stöße eines Verbrauchers entstehen. In Hilfskraftlenkungen können derartige Schwingungen beispielsweise durch Stöße erzeugt werden, die von der Fahrbahn in die gelenkten Fahrzeugräder oder in die Hilfskraftlenkung eingeleitet werden.

Aus der FR 2 632 371 ist ein Dämpfungsventil bekanntgeworden, welches zwei Druckräume voneinander trennt und die Volumenstrombahn zwischen den beiden Druckkammern gezielt beeinflußt. Das bekannte Dämpfungsventil weist eine elastische Ventilplatte auf, die sich normalerweise in einer neutralen Position befindet, und sich beim Auftreten einer Druckdifferenz zwischen den beiden Kammern aus ihrer neutralen Position in Richtung des niedrigeren Druckes verschiebt. Nachteilig wirkt sich bei diesen Dämpfungsventilen die Vielzahl an Einzelteilen und der damit verbundene große Einbauraum aus. Ein weiterer Nachteil ist die Tatsache, daß diese Rückschlagventile nur in einer Richtung wirken und sich die Dämpfungscharakteristik dieser Ventile nur sehr eingeschränkt beeinflussen läßt.

Zum weiteren Stand der Technik wird auf die FR-A-1 535 025 die ein Dämpfungsventil für druckmittelbetätigte Arbeitskreisläufe mit einem Gehäuse und einem zwischen zwei Druckmittelanschlüssen liegenden Durchflußkanal zeigt und die DE-A-196 03 183, die eine Hilfskraftlenkung für Kraftfahrzeuge zeigt, wobei in den Arbeitsleitungen zwischen den Arbeitsräumen eines Servomotors und einem Steuerventil Dämpfungsventile angeordnet sind, verwiesen.

Der vorliegenden Erfindung liegt die Aufgabe zugrunde, die Kennliniencharakteristik derart zu beeinflussen, daß es in Dämpfungsrichtung zu einem parabelförmigen Anstieg der Druck-/Volumenstromkennlinie kommen kann.

Die der Erfindung zugrunde liegende Aufgabe wird durch ein, auch die kennzeichnenden Merkmale des Hauptanspruchs aufweisendes, gattungsgemäßes Dämpfungsventil gelöst.

Die Lösung erfolgt durch das Beaufschlagen eines Federelementes mit Druck bzw. durch die Strömung eines Mediums, wodurch eine sich verändernde Querschnittsfläche erzeugt werden kann, die je nach Auslegung den gewünschten Dämpfungseffekt durch variable Drosselgeometrien darstellt. Dabei können in beiden Strömungsrichtungen gleiche oder unterschiedliche Dämpfungseigenschaften dargestellt werden.

Zweckmäßige und vorteilhafte Ausgestaltungen der Erfindung sind in den Unteransprüchen angegeben.

Sehr einfach kann das Dämpfungsventil durch das Zusammenwirken eines Federelementes mit einer Gegenkontur dargestellt werden. Das Federelement wird vorzugsweise in Form einer kreisförmigen Scheibe und in einem Gehäuse axial verschiebbar ausgeführt. Als weitere Varianten sind Federelemente in Form von Polygonen oder Kurven verwendbar.
Durch Variation von Federelement, Querschnitt und Gegenkontur kann die Charakteristik des Dämpfungsventiles verändert werden.

Zur Veränderung des Durchflußquerschnitts wird die Außen- und/oder die Innenkontur des Federelementes gegenüber der Kontur des Gehäuses axial bewegbar ausgeführt.Die Kontur des Gehäuses weist in axialer Erstreckung unterschiedliche Querschnitte auf, wodurch die Dämpfungseigenschaften beeinflußt werden können.

Die Bewegbarkeit der Außen- bzw. Innenkontur des Federelements läßt sich dadurch erreichen, daß sich das Federelement zentral am Gehäuse bzw. an der Gegenkontur abstützt und aus einem elastischen Material besteht. Bei einem solchen Federelement kann sich die jeweils bewegliche Kontur in Abhängigkeit von den Druck- und Strömungsverhältnissen in dem Dämpfungsventil in axialer Richtung einstellen.

Durch eine gezielte Vorspannung des Federelements kann eine Dämpfungswirkung bereits bei kleinsten Bewegungen erzeugt werden. Dabei kann selbst bei ebener Gegenkontur eine Drucksteuerung durch das axiale Aufliegen des Federelements und variable Öffnungsquerschnitte verwirklicht werden.

Durch die Vorgabe einer freien Öffnung, z. B. durch ein gebogenes Federelement, kann auch ein permanent vorhandener Durchfluß realisiert werden, der ein Einsetzen der Dämpfungswirkung erst bei höheren Durchflußmengen ermöglicht.
Bei Hilfskraftlenkungen von Kraftfahrzeugen z. B. können so
unerwünschte Schwingungs- und Geräuscheffekte unterdrückt werden.
Das Dämpfungsventil lässt sich als kompakte Einheit in seiner einfachsten Form aus drei Teilen herstellen, die die Basis für einstellbare Dämpfungsventile mit unterschiedlichsten Dämpfungskennlinien bilden.
Durch die freie Wählbarkeit von Gehäuse, Gegenkontur und Federelement können sogar Dämpfungsfunktionen dargestellt werden, d.h. daß die Dämpfungseigenschaften in Abhängigkeit von verschiedenen Parametern variieren können.
Wird der Durchflußquerschnitt des Dämpfungsventils in dessen Neutralstellung so groß gewählt, daß er bis zu einem bestimmten Volumenstrom ein ungehindertes Durchströmen ermöglicht, so können die Gesamtabmessungen des Dämpfungsventils klein gehalten werden. Außerdem ist so eine besonders strömungs- und damit auch geräuschunempfindliche Ausführung möglich.

Es gibt zahlreiche Gestaltungsmöglichkeiten der Kennlinie des Dämpfungsventils. So kann das Druckniveau durch die Stellschraube gehoben oder gesenkt werden. Durch die Wahl der Passung zwischen Dämpfungselement und Gehäuse kann die Steigung der Druck/Volumenstromkennlinie verändert werden.
Über ein Variieren der Steifigkeit des Dämpfungselementes, z. B. durch die Wahl der Dicke des Dämpfungselementes kann der Zeitpunkt des Einsetzens der Dämpfungswirkung beeinflußt werden.

Besonders vorteilhaft ist die Verwendung derartiger Dämpfungsventile in Hilfskraftlenkungen von Kraftfahrzeugen, da dort ein sehr begrenzter Einbauraum zur Verfügung steht und verschiedene Schwingungsarten auftreten können, deren geräuschliche und das Lenkverhalten negativ beeinflußenden Auswirkungen durch die Variabilität des Dämpfungsventils individuell beseitigt werden können.

Im folgenden wird die Erfindung anhand mehrerer in den Zeichnungen dargestellten Ausführungsbeispielen beschrieben.

Es zeigen:

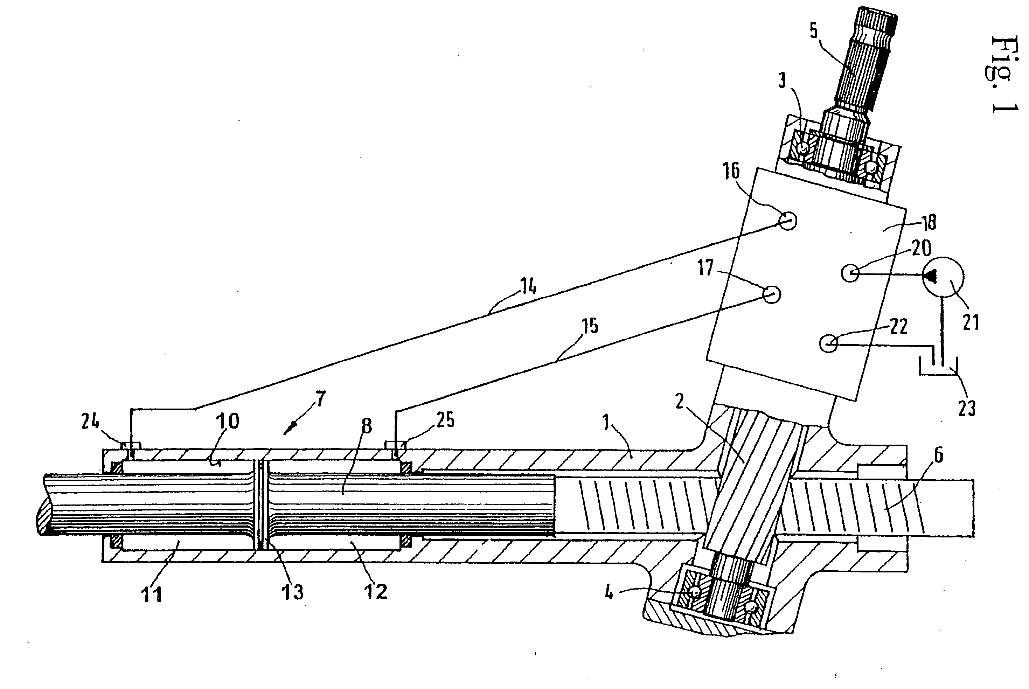

- Fig. 1: einen Teil-Längsschnitt durch eine Hilfskraftlenkung, die mit den erfindungsgemäßen Dämpfungsventilen ausgestattet werden kann;
- Fig. 2 bis 13: verschiedene Ausführungs- und Anwendungsbeispiele, teilweise in unterschiedlichen Betriebszuständen und teilweise mit zugehörigen Kennlinien.

Einige Ausführungsbeispiele werden nicht vom gegenstand gemäß Anspruch 1 bedeckt.

Als Anwendungsbeispiel für die erfindungsgemäßen Dämpfungsventile wird eine Zahnstangen-Hilfskraftlenkung beschrieben. Die erfindungsgemäßen Dämpfungsventile lassen sich jedoch in allen hydraulisch oder pneumatisch unterstützten Arbeitskreisläufen verwenden.

In einem Lenkgehäuse 1 ist ein Antriebsritzel 2 in zwei Lagern 3 und 4 drehbar gelagert. Am einen Ende des Antriebsritzel 2 befindet sich ein Lenkspindelanschluß 5.

Das Antriebsritzel 2 steht über seine Verzahnung im Eingriff mit einer Zahnstange 6, die in dem Lenkgehäuse axial verschiebbar geführt ist.

Zur Hilfskraftunterstützung dient ein Servomotor 7, dessen Kolbenstange 8 fest mit der Zahnstange 6 verbunden ist. Der Servomotor 7 enthält in einem Zylinder 10 zwei Arbeitsräume 11 und 12, die durch einen auf der Kolbenstange 8 festliegenden Kolben 13 voneinander getrennt sind. Die beiden Arbeitsräume 11 und 12 sind über Arbeitsleitungen 14 und 15 mit zwei Zylinderanschlüssen 16 und 17 eines Steuerventils 18 verbunden. Das Steuerventil 18 weist außerdem noch einen Zulaufanschluß 20 auf, an den eine Druckquelle 21 in Form einer Servopumpe angeschlossen ist. An einen Rücklaufanschluß 22 ist ein Behälter 23 angeschlossen. Die Arbeitsleitungen 14 und 15 sind über zwei Anschlußteile 24 und 25 mit dem Zylinder 10 verbunden.

In jeder der beiden Arbeitsleitungen 14 und 15 ist zwischen den Arbeitsräumen 11 und 12 des Servomotors 7 und dem Steuerventil 18 ein Dämpfungsventil 26 angeordnet. Die Dämpfungsventile 26 können entweder in den Zylinderanschlüssen 16 und 17 an dem Steuerventil 18 oder in den Anschlußteilen 24 und 25 an dem Zylinder 10 des Servomotors 7 oder direkt in den Arbeitsleitungen 14 und 15 angeordnet sein.

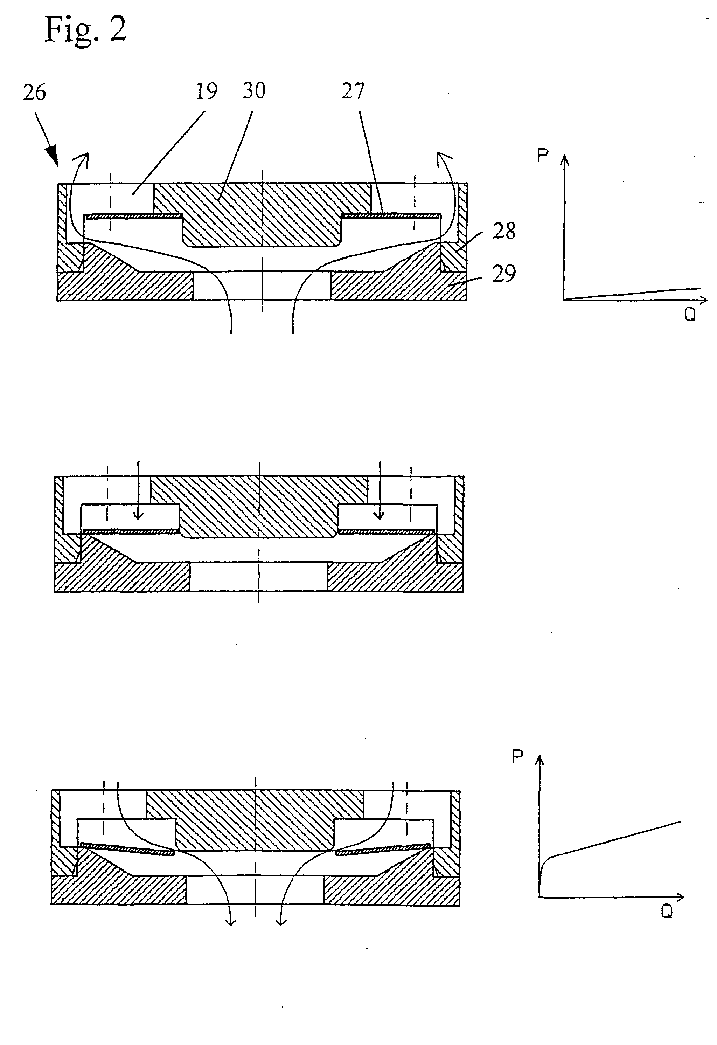

Das Dämpfungsventil 26 ist in Fig. 2 in einem ersten Ausführungsbeispiel dargestellt.

Ein Federelement 27 ist zwischen Gehäuse 28, Dekkel 29 und Gegenkontur 30 eingebaut. Das Federelement 27 wird durch das durchfließende Druckmittel in Öffnungsrichtung gegen die Gegenkontur 30 gedrückt, so daß sich ein Durchflußquerschnitt einstellt, der einen nahezu unbehinderten Durchfluß des Druckmittels ermöglicht. In der Gegenrichtung, der Drosselrichtung, legt sich das Federelement 27 an dem Deckel 29 an und sperrt zunächst den Durchfluß des Druckmittels und zwar so lange, bis sich ein definierter Druck aufgebaut hat, der das Federelement 27 an dessen Innenseite von der Gegenkontur 30 abhebt und so einen verringerten Durchflußquerschnitt freigibt. In Dämpfungsrichtung kann somit durch gegenseitige Abstimmung von Federelement 27 und Gegenkontur 30 ein genau definierter Dämpfungsdruck des Dämpfungsventils 26 eingestellt werden. Die durch diese Variante erzielbare Kennliniencharakteristik zeichnet sich durch eine geringe Dämpfung in Öffnungsrichtung und eine starke Dämpfung mit Sprungfunktion in Drosselrichtung aus.

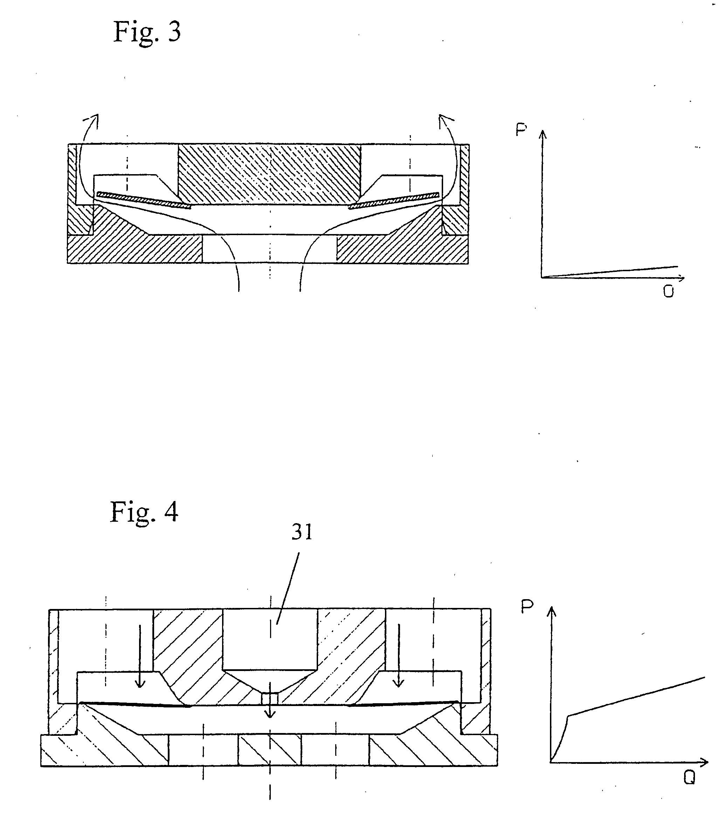

Die Dämpfungswirkung des Dämpfungsventils 26 kann auch durch die Geometrie des Federelementes 27 an sich beeinflußt werden. In Fig. 3 erfolgt die Dämpfung beispielsweise durch ein vorgebogenes Federelement 27, welches in Neutralstellung am äußeren Umfang nicht geschlossen anliegt, sondern partiell leicht geöffnet ist. Dadurch sind bei langsamen, quasistatischen Strömungsvorgängen keine Drosselvorgänge vorhanden. Bei dynamischen Strömungsvorgängen in Drosselrichtung hingegen legt sich das Federelement 27 zunächst am gesamten Umfang an, schließt somit den Durchflußquerschnitt, öffnet ab einem bestimmten Druckniveau an der Innenseite und ermöglicht somit einen gedämpften Durchfluß des Druckmittels. Die zugehörige Kennlinie zeichnet sich ebenfalls durch eine geringe Dämpfungswirkung in der offenen Richtung aus, die Charakteristik in Dämpfungsrichtung ist hier jedoch variabel. So findet bei langsamen Strömungsvorgängen ein langsamer, bei schnellen Strömungsvorgängen ein sprunghafter Druckanstieg in Abhängigkeit vom Volumenstrom statt. Durch einen schnellen Druckanstieg können z. B. die über die Fahrzeugräder eingeleiteten Stöße und Vibrationen abgeschwächt werden, während durch einen langsamen Druckanstieg bei gleichmäßigen Strömungs- und Lenkgeschwindigkeiten eine unangenehme Trägheit der Lenkung vermieden werden kann.

Wie in Fig. 4 dargestellt, wird durch eine zusätzliche Bohrung 31 in der Gegenkontur 30 die Kennliniencharakteristik dahingehend beeinflußen, daß es in Dämpfungsrichtung zu einem parabelförmigen Anstieg der Druck-/Volumenstromkennlinie kommen kann.

Durch Integration eines zusätzlichen Ventils 33 in das Dämpfungsventil 26 wird ein Sperreffekt bis zu einer bestimmten Volumenstrommenge erreicht, was zu einer Sprungfunktion in der Druck/Volumenstromkennlinie führt.

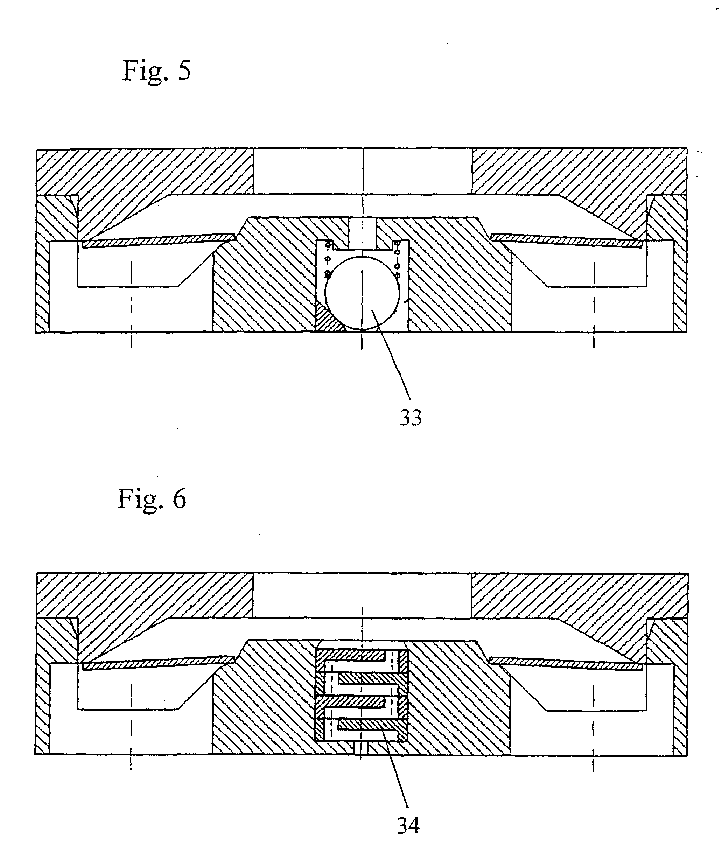

Verwendet man anstelle des Ventils 33 aus Fig. 5 ein Labyrinthsystem 34 wie in Fig. 6 dargestellt, so können dynamische Effekte, die durch über die Fahrbahn eingeleitete Stöße entstehen, durch Verwirbelung stark gedrosselt werden.

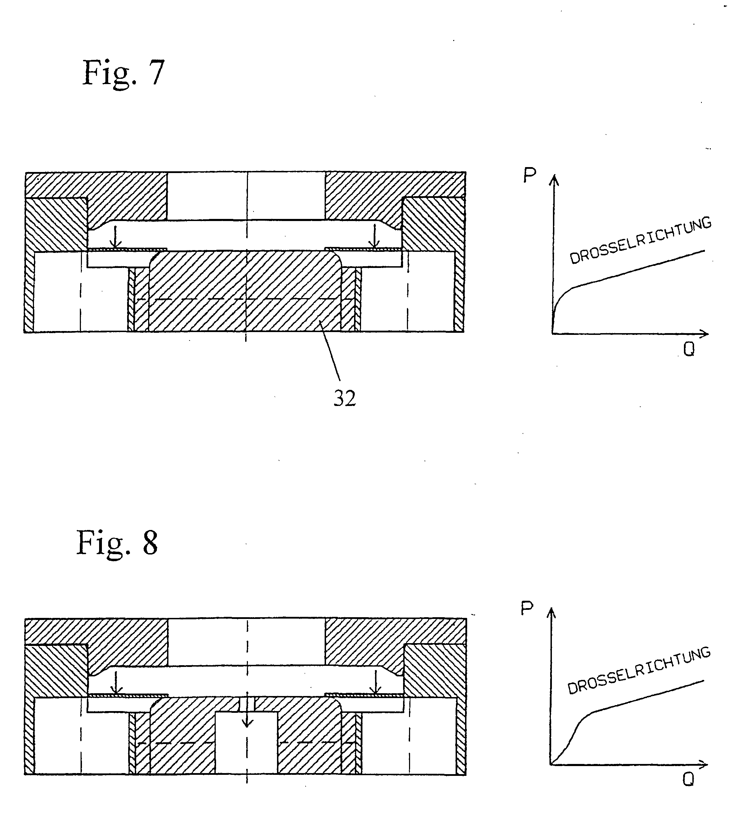

Um für jeden Fahrzeugtyp eine optimal abgestimmte Lösung zu finden, kann das Dämpfungsventil 26 auch in einer einstellbaren bzw. schaltenden Variante ausgeführt werden. Ein solches Ausführungsbeispiel zeigt Fig. 7. Die Gegenkontur 30 ist hier als Stellschraube 32 ausgebildet, die es ermöglicht das Druckniveau der Kennlinie des Dämpfungsventils 26 zu beeinflußen. Durch die Stellschraube 32 kann das Federelement 27 vorgespannt werden, wodurch die Parameter für das Einsetzen der Dämpfungswirkung beeinflußt werden können. Mit Hilfe der Stellschraube 32 kann also ein volumenstromabhängiges Dämpfungsverhalten erzeugt werden.

Fig. 8 zeigt ein einstellbares Dämpfungsventil mit zusätzlicher Bohrung in der Stellschraube, durch die ein sanfterer Anstieg der Kennlinie erreicht werden kann.

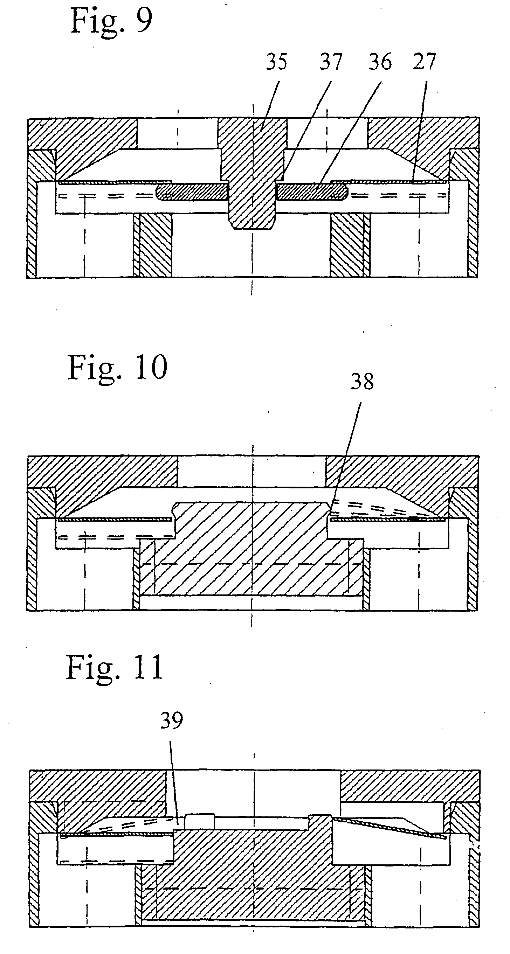

In Fig. 9 ist eine Variante mit einem zusätzlichen Schaltelement 36 beschrieben, welches an einem Fortsatz 35 beweglich ausgeführt ist. In Rücklaufrichtung wird das Schaltelement 36 von dem Federelement 27 weggedrückt und somit ein Spalt für einen ungehinderten Durchfluß geöffnet. In Drosselrichtung hingegen wird zunächst das Schaltelement 36 bis zu einem Anschlag 37 auf dem Fortsatz 35 verschoben und dann erst greift das Federelement 27 in die Steuerung des Druckverlaufs ein.

Durch eine variable Geometrie 38 der Stellschraube 32, wie sie in Fig. 10 dargestellt ist, kann in Drosselrichtung ein definierter Grunddurchfluß eingestellt werden, der sich mit zunehmendem Volumenstrom verändert. Durch die Kontur der Stellschraube kann die Druck-/Volumenstromkennlinie beliebig eingestellt werden.

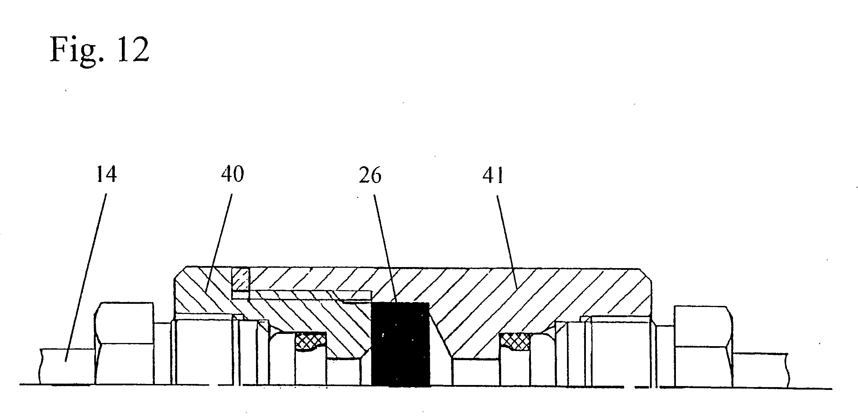

Eine weiterführende Variante ist in Fig. 11 dargestellt. Die Stellschraube 32, die an ihrer Außenseite ' zur Führung des Federelementes 27 dient, ist mit Aussparungen 39 für einen Volumenstromdurchlaß versehen. Das Federelement 27 stützt sich bei axialer Bewegung nur an zwei Punkten am Deckel 29 ab, so daß in Drosselrichtung nicht nur an der Federelementinnen-, sondern auch an dessen Außenseite durch den Hebeleffekt ein Volumenstrom vorbeifließen kann.

Fig. 12 zeigt einen Anwendungsfall des erfindungsgemäßen Dämpfungsventils 26. Das Dämpfungsventil 26 kann mit Hilfe von zwei Adaptern 40 und 41 nachträglich in eine Arbeitsleitung 14 integriert werden.

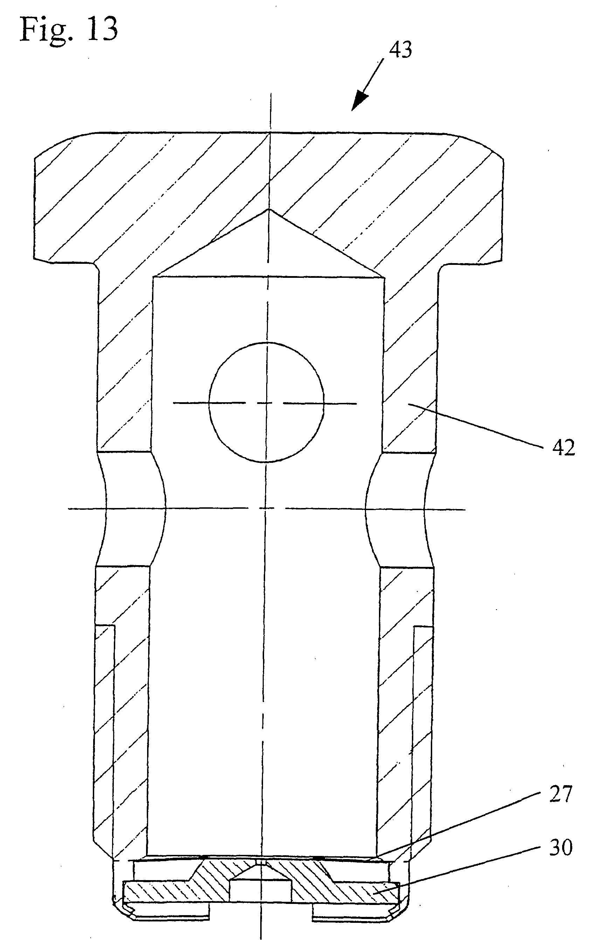

In Fig. 13 ist eine weitere Variante des erfindungsgemäßen Dämpfungsventils 26 dargestellt. Es handelt sich dabei um eine Dämpfungsventilpatrone 43, die aus einer Hohlschraube 42, einem Federelement 27 und einer Gegenkontur 30 besteht. Die Innenkontur der Hohlschraube 46 übernimmt hier die Funktion von Gehäuse 28 und Deckel 29. Diese Dämpfungsventilpatrone 43 kann einfach als Nachrüstlösung in Lenksystemen für Kraftfahrzeuge verwendet werden.

### Bezugszeichen

- 1: Lenkgehäuse
- 2: Antriebsritzel
- 3: Lager
- 4: Lager
- 5: Lenkspindelanschluß
- 6: Zahnstange
- 7: Servomotor
- 8: Kolbenstange
- 9: -
- 10: Zylinder
- 11: Arbeitsraum
- 12: Arbeitsraum
- 13: Kolben
- 14: Arbeitsleitung
- 15: Arbeitsleitung
Dämpfungsventilpatrone
- 16: Zylinderanschluß
- 17: Zylinderanschluß
- 18: Steuerventil
- 19: Durchflußkanal
- 20: Zulaufanschluß
- 21: Druckquelle
- 22: Rücklaufanschluß
- 23: Behälter
- 24: Anschlußteil
- 25: Anschlußteil
- 26: Dämpfungsventil
- 27: Federelement
- 28: Gehäuse
- 29: Deckel
- 30: Gegenkontur
- 31: Bohrung
- 32: Stellschraube
- 33: Ventil
- 34: Labyrinthsystem
- 35: Fortsatz
- 36: Schaltelement
- 37: Anschlag
- 38: variable Geometrie
- 39: Aussparung
- 40: Adapter
- 41: Adapter
- 42 43: Hohlschraube

## Patentansprüche

1. Dämpfungsventil für druckmittelbetätigte Arbeitskreisläufe eines Lenksystemes für Kraftfahrzeuge, mit einem Gehäuse (28) und einem zwischen zwei Druckmittelanschlüssen liegenden Durchflußkanal (19), dessen Querschnitt durch ein flächenförmiges Federelement (27) veränderbar ist, wobei das Federelement (27) mindestens eine zentrale Bohrung aufweist und je nach Strömungsrichtung wechselseitig innen oder außen wirkt, **dadurch gekennzeichnet, daß** das Federelement (27) mit einer Gegenkontur (30) zusammenwirkt und die Gegenkontur (30) unter Umgehung des Federelementes (27) wenigstens eine Bohrung (31) für das Druckmittel aufweist.

2. Dämpfungsventil nach Anspruch 1,
**dadurch gekennzeichnet, daß**
das Federelement (27) mindestens eine räumlich geometrische Kontur aufweist.

3. Dämpfungsventil nach Anspruch 1,
**dadurch gekennzeichnet, daß**
der Durchflußquerschnitt druck- und strömungsabhängig veränderbar ist.

4. Dämpfungsventil nach Anspruch 1,
**dadurch gekennzeichnet, daß**
das Federelement (27) axial verschiebbar ist.

5. Dämpfungsventil nach Anspruch 1,
**dadurch gekennzeichnet, daß**
in dem Gehäuse (28) wenigstens eine Drosselstelle vorgesehen ist.

6. Dämpfungsventil nach Anspruch 1,
**dadurch gekennzeichnet, daß**
in dem Gehäuse (28) eine Stellschraube (32) integriert ist.

7. Dämpfungsventil nach Anspruch 6,
**dadurch gekennzeichnet, daß**
in der Stellschraube (32) mindestens eine Drosselstelle vorgesehen ist.

8. Dämpfungsventil nach Anspruch 1,
**dadurch gekennzeichnet, daß**
ein zusätzliches Schaltelement (36) an einem Fortsatz (35) beweglich ausgeführt ist.

9. Dämpfungsventil nach Anspruch 6,
**dadurch gekennzeichnet, daß**
die Stellschraube (32) eine kurvenförmige Außenkontur aufweist.

10. Dämpfungsventil nach Anspruch 6,
**dadurch gekennzeichnet, daß**
die Stellschraube (32) mit Aussparungen (39) für einen Volumenstromdurchlaß versehen ist.

11. Dämpfungsventil nach einem der Ansprüche 1 bis 10,
**dadurch gekennzeichnet, daß**
in dem Federelement (27) wenigstens eine Drosselbohrung vorgesehen ist.

12. Verwendung eines Dämpfungsventiles (26), das nach einem der Ansprüche 1 bis 10 ausgebildet und in die Druckleitungen eines Lenksystemes für Kraftfahrzeuge integriert ist, mit einem Lenkgetriebe, einem hydraulischen Servomotor (7) für die Unterstützung eines in das Lenkgetriebe eingeleitete Lenkmoments, zwei durch einen Kolben (12) getrennte Arbeitsräume (10,11), einem Steuerventil (17) für die Steuerung eines von einer Druckquelle geförderten Druckmittels zu und von den beiden Arbeitsräumen (10,11) des Servomotors (7), welches über Arbeitsleitungen (13,14) mit den Arbeitsräumen verbunden ist.

13. Verwendung eines Dämpfungsventiles (26), das nach einem der Ansprüche 1 bis 10 ausgebildet ist,
**dadurch gekennzeichnet, daß**
die Dämpfungsventile entweder in Zylinderanschlüssen (15) und (16), an einem Steuerventil (17) oder in Anschlußteilen (22) und (23) an einem Zylinder (9) des Servomotors oder direkt in Arbeitsleitungen (13) und (14) angeordnet sind.

## Claims

1. Damping valve for pressure-medium-actuated working circuits for a steering system for motor vehicles, with a housing (28) and with a throughflow duct (19) which lies between two pressure-medium connections and the cross section of which can be modified by means of a sheet-like spring element (27), the spring element (27) having at least one central bore and acting alternately on the inside or on the outside, depending on the direction of flow, **characterized in that** the spring element (27) cooperates with a countercontour (30), and the countercontour (30), bypassing the spring element (27), has at least one bore (31) for the pressure medium.

2. Damping valve according to Claim 1, **characterized in that** the spring element (27) has at least one three-dimensionally geometric contour.

3. Damping valve according to Claim 1, **characterized in that** the throughflow cross section can be modified as a function of pressure and of flow.

4. Damping valve according to Claim 1, **characterized in that** the spring element (27) is axially displaceable.

5. Damping valve according to Claim 1, **characterized in that** at least one throttle point is provided in the housing (28).

6. Damping valve according to Claim 1, **characterized in that** a setscrew (32) is integrated in the housing (28).

7. Damping valve according to Claim 6, **characterized in that** at least one throttle point is provided in the set screw (32).

8. Damping valve according to Claim 1, **characterized in that** an additional switching element (36) is formed movably on an extension (35).

9. Damping valve according to Claim 6, **characterized in that** the setscrew (32) has a curved outer contour.

10. Damping valve according to Claim 6, **characterized in that** the setscrew (32) is provided with clearances (39) for the passage of a volume flow.

11. Damping valve according to one of Claims 1 to 10, **characterized in that** at least one throttle bore is provided in the spring element (27).

12. Use of a damping valve (26) which is designed according to one of Claims 1 to 10 and is integrated into the pressure lines of a steering system for motor vehicles, with a steering gear, with a hydraulic servomotor (7) for assisting a steering moment introduced into the steering gear, with two working spaces (10, 11) separated by a piston (12), and with a control valve (17) for controlling a pressure medium, conveyed from a pressure source to and from the two working spaces (10, 11) of the servomotor (7), the said control valve being connected to the working spaces via working lines (13, 14).

13. Use of a damping valve (26) which is designed according to one of Claims 1 to 10, **characterized in that** the damping valves are arranged either in cylinder connections (15) and (16), on a control valve (17) or in connection parts (22) and (23) on a cylinder (9) of the servomotor or directly in working lines (13) and (14).

## Revendications

1. Soupape d'amortissement pour circuits de travail commandés par un fluide sous pression d'un système de direction pour véhicules automobiles, comportant un boîtier (28) et un conduit de passage (19) qui se trouve entre deux raccords de fluide sous pression et dont la section peut être modifiée par un élément ressort plan (27), l'élément ressort (27) présentant au moins un orifice central et agissant alternativement vers l'intérieur ou vers l'extérieur suivant le sens d'écoulement, **caractérisée en ce que** l'élément ressort (27) agit conjointement avec un contre-profil (30) et le contre-profil (30), en contournant l'élément ressort (27), présente au moins un orifice (31) pour le fluide sous pression.

2. Soupape d'amortissement selon la revendication 1, **caractérisée en ce que** l'élément ressort (27) présente au moins un profil géométrique tridimensionnel.

3. Soupape d'amortissement selon la revendication 1, **caractérisée en ce que** la section de passage peut être modifiée en fonction de la pression et du débit.

4. Soupape d'amortissement selon la revendication 1, **caractérisée en ce que** l'élément ressort (27) est coulissant dans le sens axial.

5. Soupape d'amortissement selon la revendication 1, **caractérisée en ce qu'**au moins un point d'obturation est prévu dans le boîtier (28).

6. Soupape d'amortissement selon la revendication 1, **caractérisée en ce qu'**une vis de réglage (32) est intégrée dans le boîtier (28).

7. Soupape d'amortissement selon la revendication 6, **caractérisée en ce qu'**au moins un point d'obturation est prévu dans la vis de réglage (32).

8. Soupape d'amortissement selon la revendication 1, **caractérisée en ce qu'**un élément de commutation supplémentaire (36) est réalisé de manière mobile sur un prolongement (35).

9. Soupape d'amortissement selon la revendication 6, **caractérisée en ce que** la vis de réglage (32) présente un profil extérieur courbe.

10. Soupape d'amortissement selon la revendication 6, **caractérisée en ce que** la vis de réglage (32) est munie d'évidements (39) pour le passage d'un débit volumique.

11. Soupape d'amortissement selon l'une des revendications 1 à 10, **caractérisée en ce qu'**au moins un orifice d'obturation est prévu dans l'élément ressort (27).

12. Utilisation d'une soupape d'amortissement (26) configurée selon l'une des revendications 1 à 10 et intégrée dans les conduites de pression d'un système de direction pour véhicules automobiles, comportant un engrenage de direction, un servomoteur hydraulique (7) pour l'assistance d'un couple de direction envoyé dans l'engrenage de direction, deux espaces de travail (10, 11) séparés par un piston (12), une vanne pilote (17) pour la commande d'un fluide sous pression transporté par une source de pression vers et depuis les deux espaces de travail (10, 11) du servomoteur (7), laquelle est reliée avec les espaces de travail par le biais de conduites de travail (13, 14).

13. Utilisation d'une soupape d'amortissement (26) configurée selon l'une des revendications 1 à 10, **caractérisée en ce que** les soupapes d'amortissement sont disposées soit dans des raccords cylindriques (15) et (16), sur une vanne pilote (17) ou dans les éléments de raccordement (22) et (23) sur un cylindre (9) du servomoteur, soit directement dans les conduites de travail (13) et (14).
